# EUROPÄISCHE PATENTANMELDUNG

(11) **EP 4 847 152 A1**
(43) Veröffentlichungstag der Anmeldung: **02.12.2026**
(21) Anmeldenummer: 26181103.8
(22) Anmeldetag: 26.05.2026
(51) Int. Cl.: B07C 5/34, B07C 5/342, B09B 3/35, B09B 101/35

(54) **ABTRENNEN VON ASBEST UND/ODER ASBESTZEMENT AUS BETONHALTIGEM BAUSCHUTT**

(30) Priorität: 28.05.2025 DE 102025120942
(71) Anmelder: RWE Power AG, 45141 Essen (DE)
(72) Erfinder: Meitz, Jonas, 45141 Essen (DE); Dohrn, Dr. Matthias, 45141 Essen (DE); Schüngel, Dr. Michael, 45141 Essen (DE)
(74) Vertreter: Keenway Patentanwälte Neumann Heine Taruttis

(57) **Zusammenfassung**

Verfahren zum Abtrennen von Asbest und/oder Asbestzement aus betonhaltigem Bauschutt (1), umfassend:
a) Zerkleinern des Bauschutts (1) zu Bruchstücken (2),
b) Erfassen von elektromagnetischer Strahlung, welche von den in Schritt a) erhaltenen Bruchstücken (2) ausgeht sowie anhand der erfassten elektromagnetischen Strahlung Identifizieren von asbesthaltigen Bruchstücken (3) unter den in Schritt a) erhaltenen Bruchstücken (2),
c) Separieren der in Schritt b) identifizierten asbesthaltigen Bruchstücke (3) von den übrigen der Bruchstücke (2).

## Beschreibung

Die Erfindung betrifft ein Verfahren und eine Anordnung zum Abtrennen von Asbest und/oder Asbestzement aus betonhaltigem Bauschutt.

Beim Rückbau von Gebäuden stellt die Entsorgung von asbesthaltigem Bauschutt eine besondere Herausforderung dar. Oft wird asbesthaltiger Bauschutt einfach auf einer Deponie endgelagert. Allerdings ist der Asbestanteil in Bauschutt in aller Regel nur gering. Daher führt die Deponierung solchen Bauschutts zu unnötig großen Deponievolumina und Deponierungskosten. Zudem gehen durch die Deponierung solchen Bauschutts wertvolle Rohstoffe verloren. Es besteht daher ein Bedürfnis, die tatsächlich asbesthaltigen Bestandteile in Bauschutt zu erkennen und vom übrigen, unbelasteten Bauschutt zu separieren. Der unbelastete Bauschutt kann dann recycelt werden, während nur die als tatsächlich asbesthaltig eingestuften Bestandteile des Bauschutts wie asbesthaltiger Bauschutt entsorgt werden, beispielsweise durch Deponierung.

In seltenen Fällen erfolgt eine manuelle Sortierung des kontaminierten Bauschutts, was jedoch äußerst zeit- und personalintensiv sowie fehleranfällig ist. Zudem besteht dadurch ein Expositionsrisiko für die Arbeiter, die die Sortierung vornehmen.

Aus dem Stand der Technik ist jedoch kein Verfahren bekannt, mit welchem Asbest effektiv in Bauschutt erkannt und aussortiert werden kann.

Aufgabe der vorliegenden Erfindung ist es, eine besonders effektive und sichere Möglichkeit zu schaffen, Asbest aus betonhaltigem Bauschutt abzutrennen.

Diese Aufgabe wird mit dem Verfahren und der Anordnung gemäß den unabhängigen Ansprüchen gelöst.

Erfindungsgemäß wird ein Verfahren zum Abtrennen von Asbest und/oder Asbestzement aus betonhaltigem Bauschutt vorgestellt, welches umfasst:
a) Zerkleinern des Bauschutts zu Bruchstücken,
b) Erfassen von elektromagnetischer Strahlung, welche von den in Schritt a) erhaltenen Bruchstücken ausgeht sowie anhand der erfassten elektromagnetischen Strahlung Identifizieren von asbesthaltigen Bruchstücken unter den in Schritt a) erhaltenen Bruchstücken,
c) Separieren der in Schritt b) identifizierten asbesthaltigen Bruchstücke von den übrigen der Bruchstücke.

Mit dem Verfahren können Asbest und/oder Asbestzement aus betonhaltigem Bauschutt abgetrennt werden. Das impliziert, dass der Bauschutt zu Beginn des Verfahrens nicht nur betonhaltig ist, sondern auch Asbest und/oder Asbestzement enthält.

Mit dem Verfahren können sowohl Asbest als auch Asbestzement aus dem Bauschutt abgetrennt werden. Durch das explizite Erwähnen von Asbestzement an dieser Stelle kann dahinstehen, ob das Abtrennen von Asbestzement aus dem Bauschutt eine Form des Abtrennens von Asbest aus dem Bauschutt ist. Soweit nachfolgend auf Asbest eingegangen wird, gilt dies jeweils auch entsprechend für Asbestzement.

Der Bauschutt kann insbesondere vom Rückbau eines Gebäudes stammen. Beispielsweise in Deutschland ist die Verwendung von Asbest nicht mehr zulässig. Es gibt aber noch zahlreiche Gebäude, in welchen Asbest verbaut ist. Der mit dem beschriebenen Verfahren zu behandelnde Bauschutt kann insbesondere vom Rückbau eines Gebäudes mit entsprechendem Alter stammen. Der Bauschutt kann insbesondere Stahlbeton enthalten. Für die grundlegende Wirkungsweise des Verfahrens ist es jedoch unerheblich, woher der Bauschutt stammt. Auch ist es im Allgemeinen unerheblich, in welcher Form der Bauschutt vorliegt und welche Bestandteile der Bauschutt neben dem Beton und dem abzutrennenden Asbest enthält.

Asbest kann in einem rückzubauenden Gebäude aus verschiedenen Gründen enthalten sein. Insbesondere kann Asbest in Elementen wie Platten oder Rohren des Gebäudes enthalten sein, welche vor Beginn des Abbruchs des Gebäudes aus dem Gebäude entfernt werden können. Im Allgemeinen wird vor dem Abbruch eines Gebäudes alles aus dem Gebäude entfernt, was entfernt werden kann, ohne dass die Standsicherheit des Gebäudes gefährdet ist. Das beschriebe Verfahren ist demgegenüber vor allem - aber nicht nur - für solchen Bauschutt geeignet, welcher durch den Abbruch oder Teilabbruch eines Gebäudes erhalten wird. Dieser Bauschutt enthält nicht die zuvor aus dem Gebäude entfernten Elemente. Allerdings kann auch dieser Bauschutt Asbest enthalten, insbesondere in Form von Abstandshaltern und Mauerstärken. Derartige Bestandteile des Bauschutts sind im Allgemeinen nur schwer vom übrigen Bauschutt zu trennen.

Abstandshalter dienen dazu, bei Stahlbeton die Bewehrung von der Schalung fernzuhalten, bis der Beton ausgehärtet ist und somit eine Mindestüberdeckung über der obersten Bewehrungslage sicherzustellen. Abstandshalter sind insoweit ein Hilfsmittel, welches beim Errichten eines Bauwerks zum Einsatz kommen kann. Nachdem der Beton ausgehärtet ist, verbleiben die Abstandshalter im Beton und sind mit diesem formschlüssig verbunden.

Mauerstärken dienen dazu, einander gegenüberliegende Schalungswände für Beton in einem festen Abstand voneinander zu halten, bis der Beton ausgehärtet ist. Mauerstärken sind insoweit ähnlich wie Abstandshalter Hilfsmittel, welche beim Errichten eines Bauwerks zum Einsatz kommen können. Nachdem der Beton ausgehärtet ist, verbleiben die Mauerstärken im Beton.

Da die Abstandshalter und Mauerstärken vom Beton umgeben sind, stellen diese auch dann grundsätzlich keine Gefahr für die Gesundheit dar, wenn sie aus Asbestzement gebildet sind. Das ändert sich jedoch, wenn das Gebäude abgebrochen wird und die Abstandshalter bzw. Mauerstärken freigelegt werden.

Asbestzement-Abstandshalter und Asbestzement-Mauerstärken stellen deshalb bei der Entsorgung von Bauschutt eine besonders große Herausforderung dar. Es ist daher bevorzugt, dass insbesondere Asbestzement-Abstandshalter und/oder Asbestzement-Mauerstärken mit dem Verfahren aus dem Bauschutt abgetrennt werden. Das Verfahren kann in dem Fall als ein Verfahren zum Abtrennen von Asbestzement-Abstandshaltern und/oder Asbestzement-Mauerstärken aus betonhaltigem Bauschutt bezeichnet werden.

Das beschriebene Verfahren ist jedoch nicht auf das Abtrennen von Asbestzement-Abstandshaltern und/oder Asbestzement-Mauerstärken aus dem Bauschutt beschränkt. Das Verfahren kann allgemein eingesetzt werden, um Asbest aus Bauschutt abzutrennen.

In Schritt a) wird der Bauschutt zu Bruchstücken zerkleinert. Das kann beispielsweise mit einem Brecher erfolgen. In welcher Form der Bauschutt vor Schritt a) vorliegt, ist für das beschriebene Verfahren unerheblich. Insbesondere kann der Bauschutt so Schritt a) zugeführt werden, wie er beim Abbruch eines Gebäudes entsteht.

Die in Schritt a) erhaltenen Bruchstücke sind vorzugsweise kleiner als eine Maximalgröße. Die Maximalgröße kann sich durch die Art und Weise ergeben, wie die Bruchstücke mit einem Brecher erhalten werden. Für das beschriebene Verfahren ist in erster Linie relevant, welche Bruchstücke die Maximalgröße unterschreiten. Ein Bruchstück unterschreitet die Maximalgröße von 64 mm beispielsweise dann, wenn das Bruchstück in zwei Richtungen jeweils eine Ausdehnung von 64 mm unterschreitet. Je kleiner die Maximalgröße ist, umso unwahrscheinlicher ist es, dass ein Bruchstück ein darin eingebettetes Stück Asbest enthält, welches von außen nicht zu erkennen ist. Eine geringe Maximalgröße ist daher von Vorteil.

Die Maximalgröße ist vorzugsweise kleiner als 100 mm, insbesondere kleiner als 70 mm. Vorzugsweise liegt die Maximalgröße im Bereich von 50 bis 200 mm, besonders bevorzugt im Bereich von 70 bis 120 mm.

Asbestzement-Abstandshalter und Asbestzement-Mauerstärken sind im Allgemeinen stabiler als übrige Bestandteile des Bauschutts. Es kann daher angenommen werden, dass Asbestzement-Abstandshalter und Asbestzement-Mauerstärken beim Zerkleinern des Bauschutts in Schritt a) seltener zerbrechen als andere Bestandteile des Bauschutts. Es hat sich herausgestellt, dass Asbestzement-Abstandshalter und Asbestzement-Mauerstärken dadurch besonders gut im zerkleinerten Bauschutt erkannt werden können, im Idealfall sogar als Ganzes.

Mit dem beschriebenen Verfahren kann für die Bruchstücke jeweils einzeln festgestellt werden, ob diese asbesthaltig sind oder nicht. Das kann auf verschiedene Weisen erfolgen. Allen gemein ist, dass die Feststellung anhand von elektromagnetischer Strahlung erfolgt. Daher wird in Schritt b) zunächst elektromagnetische Strahlung erfasst, welche von den in Schritt a) erhaltenen Bruchstücken ausgeht. Für die Feststellung von Asbest kann elektromagnetische Strahlung aus einem breiten Spektrum an Wellenlängen herangezogen werden. Sichtbares Licht ermöglicht beispielsweise eine optische Erfassung. Infrarotstrahlung ermöglicht beispielsweise die Erfassung einer Wärmeabstrahlcharakteristik. Ein breites Wellenlängenspektrum kann zur spektroskopischen Untersuchung betrachtet werden. Welche Wellenlänge die in Schritt b) erfasste elektromagnetische Strahlung hat, hängt also von der verwendeten Analysemethode ab. Im Allgemeinen unterliegt die Wellenlänge der in Schritt b) erfassten elektromagnetischen Strahlung daher keinen Einschränkungen.

Vorzugsweise wird in Schritt b) elektromagnetische Strahlung in einem Wellenlängenbereich erfasst, der zwischen 300 und 3000 nm liegt, vorzugsweise zwischen 370 und 2500 nm. Das bedeutet, dass für die Wellenlängen innerhalb des Wellenlängenbereichs festgestellt wird, ob elektromagnetische Strahlung dieser Wellenlängen von den Bruchstücken ausgeht. Diese Feststellung kann für einzelne oder mehrere Wellenlängen das Ergebnis null ergeben. Es ist insbesondere nicht erforderlich, dass die Bruchstücke elektromagnetische Strahlung über den gesamten Wellenlängenbereich emittieren. Der Wellenlängenbereich gibt lediglich den Messbereich an, welcher untersucht wird.

Der Wellenlängenbereich erstreckt sich vorzugsweise von 300 bis 3000 nm, besonders bevorzugt von 370 bis 2500 nm. Das ist jedoch nicht erforderlich. Es genügt, dass der Wellenlängenbereich zwischen den genannten Grenzen liegt. Vorzugsweise hat der Wellenlängenbereich eine Ausdehnung von mindestens 500 nm, vorzugsweise mindestens 1000 nm, besonders bevorzugt von mindestens 2000 nm. Hat der Wellenlängenbereich eine Ausdehnung von 500 nm, kann er sich beispielsweise von 1000 nm bis 1500 nm erstrecken.

Weiterhin werden in Schritt b) anhand der erfassten elektromagnetischen Strahlung asbesthaltige Bruchstücke unter den in Schritt a) erhaltenen Bruchstücken identifiziert. Das kann je nach Wellenlängenbereich auf verschiedene Weisen erfolgen. Unten werden mehrere Beispiele dafür beschrieben. Für die grundlegende Funktionalität des Verfahrens ist unerheblich, wie dies erfolgt.

Schritt b) kann auch als ein Identifizierungsschritt bezeichnet werden.

In Schritt c) werden die in Schritt b) identifizierten asbesthaltigen Bruchstücke von den übrigen der Bruchstücke separiert. Insoweit bietet das Verfahren eine Möglichkeit, Asbest aus betonhaltigem Bauschutt abzutrennen.

Schritt c) kann als ein Sortierungsschritt bezeichnet werden.

Die Schritte a) bis c) können durchgeführt werden, ohne dass ein Bediener währenddessen mit dem Bauschutt bzw. den Bruchstücken in Kontakt gelangt. Das ergibt sich bereits daraus, dass die Identifizierung des Asbests über elektromagnetische Strahlung erfolgt. Dies kann durch eine Elektronik erfolgen, ohne dass es eines Eingriffs durch einen Bediener bedarf. Daher ist das beschriebene Verfahren besonders sicher. Das gilt insbesondere für den bevorzugten Fall, dass die Schritte a) bis c) automatisiert durchgeführt werden. Dies bietet gegenüber einer manuellen Durchführung durch einen Arbeiter den Vorteil, menschlichen Kontakt mit dem Asbest zu vermeiden. Dadurch wird das Expositionsrisiko gegenüber Asbestfasern erheblich abgesenkt. Zudem ist die manuelle Sortierung von schwer abtrennbarem Asbest zeitaufwendig, ressourcenintensiv und fehleranfällig. Die automatisierte Durchführung beschleunigt den Prozess erheblich und steigert die Effizienz, indem große Mengen Bauschutt in kurzer Zeit verarbeitet werden können.

Die Schritte a) bis c) werden vorzugsweise mit einer Anordnung durchgeführt. Das setzt voraus, dass der Bauschutt die Schritte a) bis c) am gleichen Ort durchläuft, beispielsweise bei einem Recyclingunternehmen oder auf einer Abbruchbaustelle. Das trägt besonders zur Sicherheit des Verfahrens bei, weil Asbestfasern insbesondere nach dem Zerkleinern in Schritt a) freigesetzt werden können. Erfolgen die weiteren Schritte am gleichen Ort, können Arbeiter leichter von dem Prozess abgeschirmt werden, als wenn zwischen den Schritten a) und b) etwa ein Transport an einen anderen Ort erforderlich wäre.

Unbeschadet der vorstehenden Ausführungen kann die Auswertung in Schritt b) jedoch an einem beliebigen Ort durchgeführt werden. Auf das grundlegende Konzept des Verfahrens hat es keinen Einfluss, ob die Auswertung mit einer Elektronik vor Ort oder beispielsweise mit einer Cloud-Lösung durchgeführt wird.

Für das grundlegende Konzept des Verfahrens ist es jedoch auch nicht erforderlich, dass der Bauschutt die Schritte a) bis c) am gleichen Ort durchläuft. Denkbar ist auch, dass der Bauschutt gemäß Schritt a) bereits am Ort eines abzubrechenden Gebäudes zerkleinert wird und anschließend zu einem Recyclingunternehmen transportiert wird, wo die Schritte b) und c) durchgeführt werden.

Die in Schritt a) zerkleinerten Bruchstücke werden vorzugsweise vor Schritt b) an einem ersten Ende eines Förderbands auf dem Förderband abgelegt. Schritt b) kann durchgeführt werden, während die Bruchstücke mit dem Förderband transportiert werden. Schritt c) kann beispielsweise durchgeführt werden, nachdem die Bruchstücke an einem zweiten Ende des Förderbands von dem Förderband entnommen werden, beispielsweise indem die Bruchstücke von dem Förderband fallen.

Die Bruchstücke werden vorzugsweise vor Schritt b) voneinander beabstandet auf dem Förderband abgelegt. Das erleichtert es, die Bruchstücke individuell zu untersuchen.

Die Bruchstücke passieren vorzugsweise vor Schritt b) einen Abstreifer, welcher nach oben von dem Förderband beabstandet gehalten ist. Dadurch kann verhindert werden, dass Bruchstücke übereinander angeordnet auf dem Förderband liegen und mit der Messtechnik in Schritt b) in Kontakt kommen.

Die Erfassung der elektromagnetischen Strahlung in Schritt b) kann als eine online-Messung durchgeführt werden, insbesondere wenn die Bruchstücke mit einem Förderband transportiert werden. Die Bruchstücke können dazu kontinuierlich an einer Erfassungseinrichtung vorbeibewegt werden und dabei online untersucht werden.

In einer bevorzugten Ausführungsform des Verfahrens werden vor Schritt b) solche der Bruchstücke aussortiert, die kleiner als eine Mindestgröße sind.

Durch das Zerkleinern des Bauschutts in Schritt a) entstehen Bruchstücke unterschiedlicher Größe. Für das beschriebene Verfahren ist in erster Linie relevant, welche Bruchstücke die Mindestgröße überschreiten. Dazu kann die Mindestgröße als eine einfache Längenangabe ausgedrückt werden. Ein Bruchstück überschreitet die Mindestgröße von 5 mm beispielsweise dann, wenn das Bruchstück in mindestens zwei Richtungen jeweils eine Ausdehnung von mehr als 5 mm hat. Auf die Ausdehnung des Bruchstücks in der übrigen Richtung kommt es nicht an.

Die kleineren Bruchstücke können insbesondere mit einem Sieb aussortiert werden. Hat das Sieb beispielsweise Öffnungen mit 5 mm Durchmesser, können Bruchstücke mit der Mindestgröße von 5 mm das Sieb nicht passieren. Insoweit können mit dem Sieb Bruchstücke aussortiert werden, die kleiner als die Mindestgröße sind. Alternativ oder zusätzlich zu einem Sieb können die Bruchstücke auch unter Verwendung eines beliebigen anderen Klassierungsverfahrens aussortiert werden, beispielsweise mit einem Windsichter.

Die Mindestgröße beträgt vorzugsweise mindestens 2 mm, insbesondere mindestens 4 mm oder sogar mindestens 8 mm. Eine größere Mindestgröße vorzugeben, ist aber im Allgemeinen unschädlich. Dadurch wird lediglich ein größerer Anteil des Bauschutts vor der Erfassung des Asbests aussortiert. Es ist bevorzugt, dass die Mindestgröße im Bereich von 1 bis 100 mm, insbesondere im Bereich von 3 bis 70 mm liegt.

Aussortieren bedeutet, dass die aussortierten Bruchstücke im weiteren Verlauf des Verfahrens nicht mehr berücksichtigt werden. Die Schritte b) und c) werden also jeweils nur für die nicht aussortierten Bruchstücke durchgeführt.

Es genügt, dass in der vorliegenden Ausführungsform solche Bruchstücke aussortiert werden, die kleiner als die Mindestgröße sind. Das sagt nicht, dass alle Bruchstücke, die kleiner als die Mindestgröße sind, aussortiert werden. Das ist zwar idealerweise der Fall. In der Praxis kann aber nicht davon ausgegangen werden, dass die Separierung der Bruchstücke vollständig korrekt erfolgt. Das ist für das beschriebene Verfahren auch nicht erforderlich.

Das Aussortieren der Bruchstücke erfolgt vor Schritt b). Das kann beispielsweise als ein gesonderter Schritt zwischen den Schritten a) und b) der Fall sein. Dieser Schritt kann als ein Klassierungsschritt bezeichnet werden. Die Bruchstücke werden demnach vor Schritt b) klassiert, indem solche der Bruchstücke aussortiert werden, die kleiner als eine Mindestgröße sind.

Es ist unerheblich, ob das Aussortieren als ein eigener Schritt erfolgt oder als Teil von Schritt a). Das Aussortieren kann gemeinsam mit dem Zerkleinern durchgeführt werden, so dass nach Schritt a) die Bruchstücke vorliegen, welche die Mindestgröße überschreiten.

In jedem Fall ergibt sich durch das Zusammenspiel des Zerkleinerns und des Aussortierens, dass die jeweilige Größe der Bruchstücke in Schritt b) im Wesentlichen zwischen der Mindestgröße und der Maximalgröße liegt. Dadurch kann erreicht werden, dass die Bruchstücke die richtige Größe für die Untersuchung haben.

In der vorliegenden Ausführungsform werden nur die Bruchstücke auf Asbest untersucht, die größer als die Mindestgröße sind. Kleinere Bruchstücke werden grundsätzlich aussortiert. Dabei ist es unkritisch, wenn die Separierung der Bruchstücke nicht vollständig korrekt erfolgt und dadurch einige der kleineren Bruchstücke nicht aussortiert werden. Bei den aussortierten Bruchstücken ist zwar bei theoretischer Betrachtung unklar, ob diese Asbest enthalten. Das ist jedoch in der Praxis unerheblich. Im Allgemeinen kann davon ausgegangen werden, dass nur ein vergleichsweise geringer Teil des Bauschutts auf diese Weise aussortiert wird. Dieser Teil des Bauschutts kann beispielsweise deponiert werden. Es ist daher bevorzugt, dass vor Schritt b) solche der Bruchstücke aussortiert und als asbesthaltiger Bauschutt entsorgt werden, die kleiner als eine Mindestgröße sind.

Allgemein ist das beschriebene Verfahren bereits vorteilhaft, wenn ein Teil des nichtasbesthaltigen Bauschutts als solcher erkannt und wiederverwendet wird. Selbst wenn also in der vorliegenden Ausführungsform ein erheblicher Teil des nicht-asbesthaltigen Bauschutts aussortiert werden sollte, kann das Verfahren immer noch vorteilhaft angewendet werden.

Das Aussortieren der kleinen Bruchstücke hat den Vorteil, dass alle in Schritt b) untersuchten Bruchstücke die Mindestgröße haben. Das erleichtert Schritt b). Insbesondere ist die Untersuchung optischer Eigenschaften der Bruchstücke schwierig, wenn die Bruchstücke zu klein sind.

Werden die Schritte a) bis c) mit einer Anordnung durchgeführt, werden vorzugsweise mit der Anordnung vor Schritt b) solche der Bruchstücke aussortiert, die kleiner als eine Mindestgröße sind. Wird hingegen Schritt a) an einem anderen Ort durchgeführt als die Schritte b) und c), kann das Aussortieren sowohl am Ort von Schritt a) als auch am Ort der Schritte b) und c) durchgeführt werden.

In einer weiteren bevorzugten Ausführungsform des Verfahrens wird vor Schritt b) Staub von den Bruchstücken entfernt.

Staub auf den Bruchstücken kann die nachfolgende Identifizierung des Asbests erschweren, insbesondere weil Staub für bestimmte visuelle Analysemethoden undurchdringlich ist und/oder die Messtechnik beeinträchtigen kann. Daher ist es vorteilhaft, den Staub vor Schritt b) zu entfernen. Ob dies in Schritt a) oder in einem gesonderten Schritt zwischen den Schritten a) und b) erfolgt, ist unerheblich. Insbesondere kann der Staub auch unmittelbar beim Zerkleinern der Bruchstücke beispielsweise in einem Brecher entfernt werden.

Das Entfernen des Staubs kann einen Präparationsschritt oder einen Teil eines Präparationsschritts darstellen. Ist auch ein Klassierungsschritt vorgesehen, wird der Präparationsschritt vorzugsweise nach dem Klassierungsschritt durchgeführt.

Der Staub kann auf verschiedene Weisen entfernt werden, beispielsweise durch Beaufschlagung mit einer Flüssigkeit, im einfachsten Fall Wasser, und/oder mit einem Gas, im einfachsten Fall Druckluft. Die Flüssigkeit kann anschließend einer Aufbereitung zugeführt werden.

Dass Staub von den Bruchstücken entfernt wird, sagt nicht, dass der auf den Bruchstücken befindliche Staub vollständig entfernt wird. Das ist zwar bevorzugt, aber nicht erforderlich.

In einer weiteren bevorzugten Ausführungsform des Verfahrens werden die Bruchstücke vor Schritt b) gewaschen.

Durch das Waschen kann insbesondere Staub von den Bruchstücken entfernt werden. Auch allgemein können optische Eigenschaften der Bruchstücke durch das Waschen besser erkannt werden. Das Waschen kann insbesondere durch Beaufschlagung der Bruchstücke mit einer Flüssigkeit, im einfachsten Fall Wasser, erfolgen. Die Flüssigkeit kann anschließend einer Aufbereitung zugeführt werden.

Ob das Waschen der Bruchstücke in Schritt a) oder in einem gesonderten Schritt zwischen den Schritten a) und b) erfolgt, ist unerheblich. Insbesondere können die Bruchstücke auch unmittelbar beim Zerkleinern der Bruchstücke beispielsweise in einem Brecher gewaschen werden.

Das Waschen der Bruchstücke kann einen Präparationsschritt oder einen Teil eines Präparationsschritts darstellen. Ist auch ein Klassierungsschritt vorgesehen, wird der Präparationsschritt vorzugsweise nach dem Klassierungsschritt durchgeführt.

In einer weiteren bevorzugten Ausführungsform des Verfahrens werden die Bruchstücke vor Schritt b) erwärmt und/oder getrocknet.

Das Erwärmen und/oder Trocknen kann beispielsweise erfolgen, indem die Bruchstücke mit einem Gas, im einfachsten Fall Luft, beaufschlagt werden. Hat das Gas eine entsprechende Temperatur, werden die Bruchstücke erwärmt. Getrocknet werden können die Bruchstücke demgegenüber auch mit kälterem Gas.

Das Erwärmen und/oder Trocknen der Bruchstücke kann insbesondere in einem Schritt gemeinsam mit dem Entfernen von Staub erfolgen, beispielsweise durch Beaufschlagung mit Druckluft.

Das Erwärmen und/oder Trocknen der Bruchstücke kann einen Präparationsschritt oder einen Teil eines Präparationsschritts darstellen. Ist auch ein Klassierungsschritt vorgesehen, wird der Präparationsschritt vorzugsweise nach dem Klassierungsschritt durchgeführt.

Das Erwärmen kann dazu beitragen, dass die Bruchstücke Wärmestrahlung emittieren, welche in Schritt b) als die elektromagnetische Strahlung oder als Teil derselben erfasst werden kann. Damit kann Asbest anhand der Abstrahlcharakteristik erkannt werden. Insbesondere kann durch das Erwärmen der besonders wärmerelevante Infrarotbereich besonders gut untersucht werden.

Besonders bevorzugt ist die Kombination, dass die Bruchstücke vor Schritt b) gewaschen und anschließend getrocknet werden. Dadurch können die durch das Waschen erzielbaren Vorteile erzielt werden, ohne dass dadurch verursachte Feuchtigkeit auf den Bruchstücken zu Nachteilen führt. Beispielsweise könnte Wasser auf der Oberfläche der Bruchstücke eine Messung stören. Infrarotstrahlung beispielsweise könnte durch Wasser gedämpft werden.

Ob das Erwärmen und/oder Trocknen der Bruchstücke in Schritt a) oder in einem gesonderten Schritt zwischen den Schritten a) und b) erfolgt, ist unerheblich. Insbesondere können die Bruchstücke auch unmittelbar beim Zerkleinern der Bruchstücke beispielsweise in einem Brecher erwärmt und/oder getrocknet werden. Werden die Bruchstücke auch gewaschen, erfolgt dies jedoch vorzugsweise vor dem Erwärmen und/oder Trocknen.

Insbesondere können die Bruchstücke in Schritt a) oder zwischen den Schritten a) und b) in dieser Reihenfolge klassiert, gewaschen und getrocknet werden. Das Klassieren kann jedoch auch nach dem Waschen und Trocknen erfolgen oder sogar zwischen dem Waschen und dem Trocknen.

Das Trocknen des Bauschutts kann einen Präparationsschritt oder einen Teil eines Präparationsschritts darstellen.

In einer weiteren bevorzugten Ausführungsform des Verfahrens werden die asbesthaltigen Bruchstücke in Schritt b) unter Verwendung von Spektroskopie identifiziert.

In dieser Ausführungsform kommt jedenfalls eine spektroskopische Methode zum Einsatz, um Asbest in oder an den Bruchstücken zu identifizieren. Dazu kann die in Schritt b) erfasste elektromagnetische Strahlung spektral zerlegt werden. An dem dadurch erhaltenen Spektrum können charakteristische Eigenschaften von Asbest erkannt werden. Die asbesthaltigen Bruchstücke können also in Schritt b) mittels Spektralanalyse identifiziert werden. Dafür kann beispielsweise eine hyperspektrale Bildgebung eingesetzt werden.

Die asbesthaltigen Bruchstücke können in Schritt b) insbesondere mittels Nahinfrarot-Spektroskopie und/oder laserinduzierter Plasmaspektroskopie unter Verwendung von Spektroskopie identifiziert werden.

Die asbesthaltigen Bruchstücke können in Schritt b) unter Verwendung von Spektroskopie insbesondere identifiziert werden, indem die elektromagnetische Strahlung in einem Wellenlängenbereich von 380 bis 2500 nm, insbesondere von 960 bis 2500 nm untersucht wird.

Der Einsatz von Spektroskopie erfordert implizit, dass die Bruchstücke ausreichend beleuchtet sind. Das kann durch eine Maßnahme erfolgen, die außerhalb des beschriebenen Verfahrens liegt, beispielsweise indem das Verfahren an einem ohnehin gut ausgeleuchteten Ort durchgeführt wird. Die Bruchstücke können aber auch in Schritt b) als Teil des Verfahrens beleuchtet werden.

In einer weiteren bevorzugten Ausführungsform des Verfahrens werden die asbesthaltigen Bruchstücke in Schritt b) unter Verwendung von optischer Mustererkennung identifiziert.

Die Mustererkennung kann insbesondere mittels künstlicher Intelligenz durchgeführt werden. Durch die Mustererkennung können beispielsweise eine Struktur und/oder eine Textur von Asbest erkannt werden, insbesondere von Asbestzement-Abstandshaltern und Asbestzement-Mauerstärken. Insbesondere können durch die Mustererkennung Bruchflächen von Asbest erkannt werden. Eine künstliche Intelligenz kann darauf trainiert werden.

Alternativ oder zusätzlich kann beispielsweise die Form oder die Geometrie von Asbestzement-Abstandshaltern und Asbestzement-Mauerstärken erkannt werden. Dazu kann eine künstliche Intelligenz auf einen bestimmten Typ Asbestzement-Abstandshalter und/oder einen bestimmten Typ Asbestzement-Mauerstärke trainiert werden. Das ist insoweit sinnvoll, als dass in Bauschutt oft Asbestzement-Abstandshalter eines bestimmten Typs und/oder Asbestzement-Mauerstärken eines bestimmten Typs enthalten sind.

Alternativ oder zusätzlich können durch die Mustererkennung auch andere Elemente wie beispielsweise Bindedraht erkannt werden, welche selbst zwar nicht aus Asbest gebildet sind, jedoch auf das Vorliegen von Asbest und/oder Abstandshaltern, die Asbest enthalten, hindeuten können.

Die optische Mustererkennung kann insbesondere mit sichtbarem Licht durchgeführt werden. Da es für sichtbares Licht verschiedene Definitionen gibt, wird hierin unmittelbar auf die Wellenlängen abgestellt. Die optischer Mustererkennung kann demnach insbesondere mit elektromagnetischer Strahlung mit einem Wellenlängenbereich durchgeführt werden, welcher zumindest einen Teil der Wellenlängen zwischen 360 bis 830 nm abdeckt.

Dass optische Muster anhand der von den Bruchstücken ausgehenden elektromagnetischen Strahlung erkannt werden, erfordert implizit, dass die Bruchstücke ausreichend beleuchtet sind. Das kann durch eine Maßnahme erfolgen, die außerhalb des beschriebenen Verfahrens liegt, beispielsweise indem das Verfahren an einem ohnehin gut ausgeleuchteten Ort durchgeführt wird. Die Bruchstücke können aber auch in Schritt b) als Teil des Verfahrens beleuchtet werden.

In einer weiteren bevorzugten Ausführungsform des Verfahrens werden die asbesthaltigen Bruchstücke in Schritt b) unter Berücksichtigung einer optischen Eigenschaft identifiziert.

Als optische Eigenschaft kommen insbesondere eine Farbe, eine Farbveränderung, eine Textur, eine Struktur, eine Homogenität und eine Reflektivität in Betracht. Die optische Eigenschaft kann mit einer Kamera erfasst werden. Die optische Eigenschaft kann insbesondere an elektromagnetischer Strahlung mit einem Wellenlängenbereich erkannt werden, welche zumindest einen Teil der Wellenlängen zwischen 360 bis 830 nm abdeckt.

Dass eine optische Eigenschaft anhand der von den Bruchstücken ausgehenden elektromagnetischen Strahlung erkannt wird, erfordert implizit, dass die Bruchstücke ausreichend beleuchtet sind. Das kann durch eine Maßnahme erfolgen, die außerhalb des beschriebenen Verfahrens liegt, beispielsweise indem das Verfahren an einem ohnehin gut ausgeleuchteten Ort durchgeführt wird. Bevorzugt ist jedoch, dass die Bruchstücke in Schritt b) als Teil des Verfahrens beleuchtet werden. Das erfolgt vorzugsweise mit Licht spezifischer Wellenlängen.

In einer weiteren bevorzugten Ausführungsform des Verfahrens werden die asbesthaltigen Bruchstücke in Schritt b) unter Berücksichtigung einer Abstrahlcharakteristik identifiziert.

Asbest und Asbestzement können anhand der Abstrahlcharakteristik von anderen Materialien unterschieden werden. Das kann insbesondere bei der Spektroskopie ausgenutzt werden. Alternativ oder zusätzlich kann die Abstrahlcharakteristik auch genutzt werden, um Asbest und Asbestzement anhand von Temperaturunterschieden zu erkennen. Das ergibt sich daraus, dass verschiedene Materialien im Allgemeinen verschiedene Wärmekapazitäten haben.

Beispielsweise kann die Abstrahlcharakteristik der Bruchstücke im Nahinfrarot-Bereich untersucht werden. Daher ist bevorzugt, dass die asbesthaltigen Bruchstücke in Schritt b) unter Berücksichtigung einer Abstrahlcharakteristik in einem Wellenlängenbereich identifiziert werden, welcher zumindest einen Teil der Wellenlängen zwischen 780 und 3000 nm abdeckt, vorzugsweise zumindest einen Teil der Wellenlängen zwischen 800 und 2500 nm oder sogar zumindest einen Teil der Wellenlängen zwischen 1000 und 2500 nm. Insbesondere die elektromagnetische Strahlung im Nahinfrarot-Bereich kann auch als Wärmestrahlung bezeichnet werden.

Die Abstrahlcharakteristik kann insbesondere dann ausgenutzt werden, wenn die Bruchstücke vor Schritt b) erwärmt werden. Insbesondere in dem Fall können die Bruchstücke eine vergleichsweise hohe Temperatur haben, wodurch die Abstrahlcharakteristik besonders ausgeprägt ist. Es ist jedoch nicht erforderlich, dass die Bruchstücke gesondert erwärmt werden. Insbesondere ist nicht erforderlich, dass dies als Teil des beanspruchten Verfahrens stattfindet.

Zuvor wurde beschrieben, dass die asbesthaltigen Bruchstücke in Schritt b) auf verschiedene Weisen identifiziert werden können. Die dazu angegebenen Methoden können jeweils einzeln oder in beliebiger Kombination miteinander genutzt werden. Die asbesthaltigen Bruchstücke können also in Schritt b)
▪ unter Verwendung von Spektroskopie
   und/oder
▪ unter Verwendung von optischer Mustererkennung
   und/oder
▪ unter Berücksichtigung einer optischen Eigenschaft
   und/oder
▪ unter Berücksichtigung einer Abstrahlcharakteristik
identifiziert werden. Kommt mehr als eine der genannten Methoden zum Einsatz, kann es widersprüchliche Ergebnisse geben. Beispielsweise kann an einem Bruchstück mittels Spektroskopie Asbest erkannt werden, während bei der optischen Mustererkennung kein Asbest erkannt wird. Derartige Widersprüche können auf verschiedene Arten behandelt werden. Im einfachsten Fall wird ein Bruchstück als asbesthaltig eingestuft, sofern mit zumindest einer der Methoden Asbest erkannt wurde. Falsch negative Erkennungen können in dem Fall durch die Verwendung mehrerer verschiedener Methoden verringert werden. Die Verwendung mehrerer verschiedener Methoden kann insoweit die Sicherheit des Verfahrens erhöhen.

In einer weiteren bevorzugten Ausführungsform des Verfahrens wird nach Schritt b) validiert, ob die in Schritt b) identifizierten asbesthaltigen Bruchstücke tatsächlich Asbest enthalten und/oder ob die übrigen Bruchstücke tatsächlich kein Asbest enthalten. Der "und"-Fall ist bevorzugt.

In dieser Ausführungsform enthält das Verfahren einen zusätzlichen Validierungsschritt. Dieser wird nach Schritt b) und vorzugsweise auch nach Schritt c) durchgeführt. Nach Schritt c) sind die Bruchstücke bereits in asbesthaltig und nicht-asbesthaltig unterteilt. Bei den als asbesthaltig eingestuften Bruchstücken kann dann validiert werden, ob diese tatsächlich Asbest enthalten. Bei den als nicht-asbesthaltig eingestuften Bruchstücken kann entsprechend validiert werden, ob diese tatsächlich kein Asbest enthalten.

Die Validierung kann stichprobenhaft durchgeführt werden. Die Validierung erfolgt vorzugsweise online. Für diese Untersuchung kommt jedes Verfahren zum Erkennen von Asbest in Betracht, beispielsweise eine Punktmessung im Nahinfrarot-Bereich.

Wird bei der Validierung ein Fehler erkannt, wird Schritt b) vorzugsweise angepasst, um dem Fehler entgegenzuwirken. Insoweit kann das Verfahren ständig weiterentwickelt werden. Das gilt insbesondere, wenn künstliche Intelligenz eingesetzt wird.

Wird festgestellt, dass ein in Schritt b) identifiziertes asbesthaltiges Bruchstück tatsächlich kein Asbest enthält, handelt es sich um einen falsch positiven Fall. Ein solcher hat zur Folge, dass ein größerer Anteil des Bauschutts als asbesthaltiger Bauschutt entsorgt wird, als dies erforderlich wäre. Verglichen mit Lösungen aus dem Stand der Technik, bei welchen der gesamte Bauschutt als asbesthaltiger Bauschutt entsorgt wird, wird aber mit dem beschriebenen Verfahren unabhängig von der Anzahl falsch positiver Fälle immer eine Verbesserung erzielt. Zudem ergibt sich aus falsch positiven Fällen kein Gesundheitsrisiko. Daher sind falsch positive Fälle hinnehmbar. Zur Steigerung der Effektivität des beschriebenen Verfahrens sollte aber angestrebt werden, die Zahl falsch positiver Fälle so gering wie möglich zu halten. Wird daher ein falsch positiver Fall erkannt, wird Schritt b) vorzugsweise angepasst, um dem Fehler entgegenzuwirken. Im Zweifelsfall wird jedoch Schritt b) so durchgeführt, dass die Hürde zur Einstufung eines Bruchstück als asbesthaltig eher zu niedrig angesetzt ist, so dass es eher zu den unkritischen falsch positiven Fälle kommt als zu falsch negativen Fällen.

Als ein weiterer Aspekt der Erfindung wird eine Anordnung zum Abtrennen von Asbest aus betonhaltigem Bauschutt vorgestellt, welche umfasst:
- eine Zerkleinerungseinrichtung zum Zerkleinern des Bauschutts zu Bruchstücken,
- eine Erfassungseinrichtung zum Erfassen von elektromagnetischer Strahlung, welche von den Bruchstücken ausgeht,
- eine Auswerteeinrichtung zum Identifizieren von asbesthaltigen Bruchstücken unter den Bruchstücken anhand der mit der Erfassungseinrichtung erfassten elektromagnetischen Strahlung,
- eine Separierungseinrichtung zum Separieren der mit der Auswerteeinrichtung identifizierten asbesthaltigen Bruchstücke von den übrigen der Bruchstücke.

Die Vorteile und Merkmale des Verfahrens sind auf die Anordnung anwendbar und übertragbar, und umgekehrt. Die Anordnung ist vorzugsweise zum Betrieb gemäß dem Verfahren eingerichtet. Das Verfahren wird vorzugsweise mit der Anordnung durchgeführt.

Die Auswerteeinrichtung kann durch Elektronik an beliebiger Stelle ausgebildet sein. Insbesondere kann die Auswerteeinrichtung auch über eine Cloud-Lösung ausgebildet sein, auf welche beispielsweise über eine Internetverbindung zugegriffen werden kann. Für die Funktionsweise der Anordnung ist es unerheblich, an welchem Ort die Auswertung durchgeführt wird.

Die Anordnung umfasst vorzugsweise weiterhin:
- eine zwischen der Zerkleinerungseinrichtung und der Erfassungseinrichtung angeordnete Klassierungseinrichtung zum Aussortieren der Bruchstücke, die kleiner als eine Mindestgröße sind.

Die Anordnung umfasst vorzugsweise weiterhin:
- eine zwischen der Zerkleinerungseinrichtung und der Erfassungseinrichtung angeordnete Präparationseinrichtung zum Präparieren der Bruchstücke.

Die Präparationseinrichtung kann
▪ eine Staubentfernungseinrichtung zum Entfernen von Staub von den Bruchstücken,
   und/oder
▪ eine Wascheinrichtung zum Waschen der Bruchstücke,
   und/oder
▪ eine Erwärmungs- und/oder Trocknungseinrichtung zum Erwärmen und/oder Trocknen der Bruchstücke
umfassen. Insbesondere kann die Präparationseinrichtung als eine Wasch- und Trocknungseinrichtung zum Waschen und Trocken der Bruchstücke ausgebildet sein.

Sind sowohl eine Klassierungseinrichtung als auch eine Präparationseinrichtung vorgesehen, ist die Klassierungseinrichtung vorzugsweise der Präparationseinrichtung vorgeordnet. Es ergibt sich dann folgende Reihenfolge: Zerkleinerungseinrichtung, Klassierungseinrichtung, Präparationseinrichtung, Erfassungseinrichtung, Separierungseinrichtung. Dies bezieht sich auf die Reihenfolge, in welcher die genannten Elemente von den Bruchstücken durchlaufen werden. Die Auswerteeinrichtung ist insoweit außen vor. Diese kann an beliebiger Stelle angeordnet sein.

Die Erfindung wird nachfolgend anhand der Figur näher erläutert. Die Figur zeigt ein bevorzugtes Ausführungsbeispiel, auf das die Erfindung jedoch nicht begrenzt ist. Die Figur und die darin dargestellten Größenverhältnisse sind nur schematisch. Es zeigt:

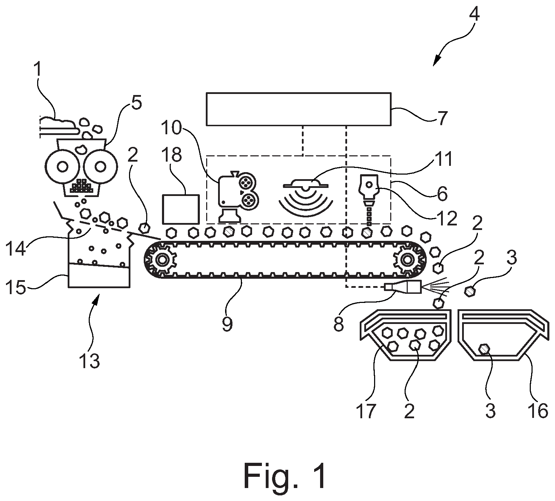

- Fig. 1:: eine erfindungsgemäße Anordnung zum Abtrennen von Asbest aus betonhaltigem Bauschutt, mit welcher ein erfindungsgemäßes Verfahren zum Abtrennen von Asbest aus betonhaltigem Bauschutt durchführbar ist.

Fig. 1 zeigt eine Anordnung 4 zum Abtrennen von Asbest aus betonhaltigem Bauschutt 1. Die Anordnung 4 umfasst eine Zerkleinerungseinrichtung 5 zum Zerkleinern des Bauschutts 1 zu Bruchstücken 2. Stromab Zerkleinerungseinrichtung 5 umfasst die Anordnung 4 eine Klassierungseinrichtung 13 zum Aussortieren der Bruchstücke 2, die kleiner als eine Mindestgröße sind. Dazu weist die Klassierungseinrichtung 13 ein Sieb 14 auf, welches für die Bruchstücke 2 oberhalb der Mindestgröße undurchlässig ist. Alternativ oder zusätzlich zu dem Sieb 14 kann auch beispielsweise ein Windsichter genutzt werden. Diese Bruchstücke 2 gelangen von dem Sieb 14 auf ein Förderband 9. Die kleineren Bruchstücke 2 unterhalb der Mindestgröße fallen hingegen nach unten in einen Auffangbehälter 15.

Weiterhin umfasst die Anordnung 4 eine Wasch- und Trocknungseinrichtung 18, welche am Anfang des Förderbandes 9 angeordnet ist. Damit können die auf das Förderband 9 abgelegten Bruchstücke 2 gewaschen und getrocknet werden. Durch das Waschen kann insbesondere Staub von den Bruchstücken 2 entfernt werden. Das Trocknen kann insbesondere durch Erwärmen erfolgen.

Weiterhin umfasst die Anordnung 4 eine Erfassungseinrichtung 6 zum Erfassen von elektromagnetischer Strahlung, welche von den Bruchstücken 2 auf dem Förderband 9 ausgeht. Im gezeigten Beispiel umfasst die Erfassungseinrichtung 6 eine Kamera 10, ein NIRS-Gerät 11 für Nahinfrarot-Spektroskopie und ein LIPS-Gerät 12 für laserinduzierte Plasmaspektroskopie.

Weiterhin umfasst die Anordnung 4 eine Auswerteeinrichtung 7 zum Identifizieren von asbesthaltigen Bruchstücken 3 unter den Bruchstücken 2 anhand der mit der Erfassungseinrichtung 6 erfassten elektromagnetischen Strahlung. Die Auswerteeinrichtung 7 ist mit der Erfassungseinrichtung 6 verbunden und kann Signale von der Kamera 10, dem NIRS-Gerät 11 und dem LIPS-Gerät 12 empfangen.

Weiterhin umfasst die Anordnung 4 eine Separierungseinrichtung 8 zum Separieren der mit der Auswerteeinrichtung 7 identifizierten asbesthaltigen Bruchstücke 3 von den übrigen der Bruchstücke 2. Im gezeigten Beispiel weist die Separierungseinrichtung 8 eine Druckluftdüse auf, mit welcher die asbesthaltigen Bruchstücke 3 in einen ersten Container 16 gelenkt werden. Die übrigen Bruchstücke 2 fallen hingegen in einen zweiten Container 17. Insoweit wird die angestrebte Separierung des Asbests erreicht.

Mit der Anordnung 4 kann ein Verfahren zum Abtrennen von Asbest aus betonhaltigem Bauschutt 1 durchgeführt werden. Das Verfahren umfasst:
a) Zerkleinern des Bauschutts 1 zu den Bruchstücken 2 mit der Zerkleinerungseinrichtung 5,
b) mit der Erfassungseinrichtung 6 Erfassen von elektromagnetischer Strahlung, welche von den in Schritt a) erhaltenen Bruchstücken 2 ausgeht und mit der Auswerteeinrichtung 7 anhand der erfassten elektromagnetischen Strahlung Identifizieren von asbesthaltigen Bruchstücken 3 unter den in Schritt a) erhaltenen Bruchstücken 2,
c) mit der Separierungseinrichtung 8 Separieren der in Schritt b) identifizierten asbesthaltigen Bruchstücke 3 von den übrigen der Bruchstücke 2.

Mit der Klassierungseinrichtung 13 werden zwischen Schritt a) und Schritt b) solche der Bruchstücke 2 aussortiert, die kleiner als eine Mindestgröße sind. Mit der Wasch- und Trocknungseinrichtung 18 werden die verbleibenden Bruchstücke 2 zwischen Schritt a) und Schritt b) gewaschen und getrocknet. Dadurch wird insbesondere Staub von den Bruchstücken 2 entfernt und die Bruchstücke 2 werden erwärmt.

In Schritt b) werden die asbesthaltigen Bruchstücke 3 mit der Kamera 10 unter Verwendung von optischer Mustererkennung und unter Berücksichtigung optischer Eigenschaften sowie mit dem NIRS-Gerät 11 und mit dem LIPS-Gerät 12 unter Verwendung von Spektroskopie identifiziert. Die Identifizierung mit dem NIRS-Gerät 11 erfolgt dabei unter Berücksichtigung einer Abstrahlcharakteristik. Die mit der Kamera 10, dem NIRS-Gerät 11 und dem LIPS-Gerät 12 erfassten Daten werden dabei gemeinsam von der Auswerteeinheit 7 verarbeitet.

### Bezugszeichenliste

- 1: Bauschutt
- 2: Bruchstück
- 3: asbesthaltiges Bruchstück
- 4: Anordnung
- 5: Zerkleinerungseinrichtung
- 6: Erfassungseinrichtung
- 7: Auswerteeinrichtung
- 8: Separierungseinrichtung
- 9: Förderband
- 10: Kamera
- 11: NIRS-Gerät
- 12: LIPS-Gerät
- 13: Klassierungseinrichtung
- 14: Sieb
- 15: Auffangbehälter
- 16: erster Container
- 17: zweiter Container
- 18: Wasch- und Trocknungseinrichtung

## Patentansprüche

1. Verfahren zum Abtrennen von Asbest und/oder Asbestzement aus betonhaltigem Bauschutt (1), umfassend:
a) Zerkleinern des Bauschutts (1) zu Bruchstücken (2),
b) Erfassen von elektromagnetischer Strahlung, welche von den in Schritt a) erhaltenen Bruchstücken (2) ausgeht sowie anhand der erfassten elektromagnetischen Strahlung Identifizieren von asbesthaltigen Bruchstücken (3) unter den in Schritt a) erhaltenen Bruchstücken (2),
c) Separieren der in Schritt b) identifizierten asbesthaltigen Bruchstücke (3) von den übrigen der Bruchstücke (2).

2. Verfahren nach Anspruch 1, wobei vor Schritt b) solche der Bruchstücke (2) aussortiert werden, die kleiner als eine Mindestgröße sind.

3. Verfahren nach einem der vorstehenden Ansprüche, wobei vor Schritt b) Staub von den Bruchstücken (2) entfernt wird.

4. Verfahren nach einem der vorstehenden Ansprüche, wobei die Bruchstücke (2) vor Schritt b) gewaschen werden.

5. Verfahren nach einem der vorstehenden Ansprüche, wobei die Bruchstücke (2) vor Schritt b) erwärmt und/oder getrocknet werden.

6. Verfahren nach einem der vorstehenden Ansprüche, wobei die asbesthaltigen Bruchstücke (3) in Schritt b) unter Verwendung von Spektroskopie identifiziert werden.

7. Verfahren nach einem der vorstehenden Ansprüche, wobei die asbesthaltigen Bruchstücke (3) in Schritt b) unter Verwendung von optischer Mustererkennung identifiziert werden.

8. Verfahren nach einem der vorstehenden Ansprüche, wobei die asbesthaltigen Bruchstücke (3) in Schritt b) unter Berücksichtigung einer optischen Eigenschaft identifiziert werden.

9. Verfahren nach einem der vorstehenden Ansprüche, wobei die asbesthaltigen Bruchstücke (3) in Schritt b) unter Berücksichtigung einer Abstrahlcharakteristik identifiziert werden.

10. Anordnung (4) zum Abtrennen von Asbest und/oder Asbestzement aus betonhaltigem Bauschutt (1), umfassend:
- eine Zerkleinerungseinrichtung (5) zum Zerkleinern des Bauschutts (1) zu Bruchstücken (2),
- eine Erfassungseinrichtung (6) zum Erfassen von elektromagnetischer Strahlung, welche von den Bruchstücken (2) ausgeht,
- eine Auswerteeinrichtung (7) zum Identifizieren von asbesthaltigen Bruchstücken (3) unter den Bruchstücken (2) anhand der mit der Erfassungseinrichtung (6) erfassten elektromagnetischen Strahlung,
- eine Separierungseinrichtung (8) zum Separieren der mit der Auswerteeinrichtung (7) identifizierten asbesthaltigen Bruchstücke (3) von den übrigen der Bruchstücke (2).
